# EUROPEAN PATENT SPECIFICATION

(11) **EP 3 591 502 B1**
(45) Date of publication and mention of the grant of the patent: **13.03.2024**
(21) Application number: 17901675.3
(22) Date of filing: 07.07.2017
(51) Int. Cl.: G06F 3/01, G06T 9/00, H04N 19/164, H04N 19/115, H04N 19/27, H04N 19/177, A63F 13/355

(54) **VIRTUAL REALITY IMAGE SENDING METHOD AND APPARATUS**
VERFAHREN UND VORRICHTUNG ZUM SENDEN VON BILDERN DER VIRTUELLEN REALITÄT
PROCÉDÉ ET APPAREIL D'ENVOI D'IMAGE DE RÉALITÉ VIRTUELLE

(30) Priority: 22.03.2017 CN 201710175242
(43) Date of publication of application: 08.01.2020
(73) Proprietor: Huawei Technologies Co., Ltd., Longgang District Shenzhen, Guangdong 518129 (CN)
(72) Inventor: LUO, Yi, Shenzhen Guangdong 518129 (CN); ZHENG, Fangzhou, Shenzhen Guangdong 518129 (CN); XU, Yu, Shenzhen Guangdong 518129 (CN); QIU, Wenyi, Shenzhen Guangdong 518129 (CN)
(74) Representative: Gill Jennings & Every LLP
(86) International application number: PCT/CN2017/092285
(87) International publication number: WO 2018/171084

(56) References cited:
- CN-A- 103 248 883
- CN-A- 105 117 111
- CN-A- 106 293 043
- US-A1- 2013 212 216
- US-A1- 2016 378 177
- US-A1- 2017 045 941
- US-B2- 9 460 351
- PERRITAZ DAMIEN ET AL: "6th Sense- Toward a Generic Framework for End-to-End Adaptive Wearable Augmented Reality", 1 January 2009 (2009-01-01), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 280 - 310, XP047393246, ISBN: 978-3-642-17318-9 * abstract * * sections 3.2, 4 and 6.3 with figures 1 and 4, in particular, sections 4.2 and 4.3 with figure 4 *
- LIQIAO HAN ET AL: "Cross layer optimization for scalable video multicast over 802.11 WLANs", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 2, 8 January 2006 (2006-01-08), pages 838-843, XP010893294, DOI: 10.1109/CCNC.2006.1593157 ISBN: 978-1-4244-0085-0

## Description

### TECHNICAL FIELD

This application relates to the field of virtual reality technologies, and in particular, to a method and an apparatus for sending a virtual reality image.

### BACKGROUND

Virtual reality (Virtual Reality, VR) technology is a newly emerging multimedia technology in recent years. The VR technology is a computer simulation technology that can be used to create and experience a virtual world. A user usually wears a virtual reality device to experience a VR scenario. The virtual reality device uses a graphics system, an optical system, and a posture tracking system that are integrated, so that the user can obtain an interactive immersive experience.

At present, a processing capability of the virtual reality device is limited, and the virtual reality device may be unable to implement some large games or video applications. Therefore, at present, it is proposed in the industry that a processor used to perform massive computing is disposed on other devices such as a desktop computer, a mobile phone, or a game console. These devices are referred to as virtual reality hosts. The virtual reality host generates a virtual reality image, and wirelessly sends the virtual reality image to the virtual reality device. The virtual reality device is only used to receive the virtual reality image sent by the virtual reality host and display the virtual reality image. This helps reduce a weight and a size of the virtual reality device and brings better experience to the user. Therefore, a current VR system usually includes a virtual reality device and a virtual reality host. The virtual reality host is used to create a virtual world, and a user experiences the virtual world by wearing the virtual reality device.

To present a richer virtual world, a large quantity of virtual reality images are transmitted in the VR system; in other words, a data volume is very large. Generally, a radio channel between the virtual reality host and the virtual reality device is required to have a transmission rate of 5 Gbps or more, but an existing commercial radio channel cannot meet this requirement. To resolve this problem, a method for compressing a virtual reality image before transmission is proposed in the industry to reduce a volume of transmitted data, so as to meet a bandwidth requirement.

In the prior art, an image compression ratio used to compress a virtual reality image is determined based on channel quality of a radio channel. For example, if current channel quality is relatively poor, a relatively large image compression ratio may be determined to reduce a volume of transmitted data. However, the image compression ratio determined in this manner is inaccurate. For example, a switching rate of a virtual reality image displayed by the virtual reality device is sometimes high and sometimes low. For a slow motion image or even a static virtual reality image, a user usually is relatively picky about image quality. Therefore, in this case, to ensure the image quality, a relatively large image compression ratio cannot be used to compress the virtual reality image. However, if the channel quality is always poor, the virtual reality host always compresses the virtual reality image by using a relatively large image compression ratio, and this eventually leads to poor image quality. It can be learned that the current manner of determining the image compression ratio is relatively low in accuracy.

Publication by PERRITAZ DAMIEN ET AL: "6th Sense- Toward a Generic Framework for End-to-End Adaptive Wearable Augmented Reality", INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 280- 310, ISBN: 978-3-642-17318-9 relates to adaptive wearable augmented reality and discloses to adapt the video compression rate for transmitting video from a host to a head mounted device HMD to the motion of the HMD. LIQIAO HAN ET AL: "Cross layer optimization for scalable video multicast over 802.11 WLANs", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA, IEEE, vol. 2, 8 January 2006 (2006-01-08), pages 838-843, DOI: 10.1109/ CCNC.2006.1593157, ISBN: 978-1-4244-0085-0, discloses a joint source-channel coding principle by adaptively selecting a source coding rate, a WLAN physical layer modulation mode and channel coding rate (PHY-mode) depending on the channel capacity. The modulation and channel coding rate can be selected based on the channel capacity and the bitrate of the coded source.

### SUMMARY

This application provides a method and an apparatus for sending a virtual reality image, to improve accuracy of an image compression ratio determined in a VR system.

Various aspects of the present disclosure have been defined in the independent claims. Further technical features of each of these aspects have been defined in the respective dependent claims.

The virtual reality host determines the image compression ratio based on motion information of the virtual reality device. For example, when a moving rate of the virtual reality device is relatively low, that is, when a switching rate of a virtual reality image displayed by the virtual reality device is relatively low, a relatively small image compression ratio is determined to ensure quality of the virtual reality image. When the moving rate of the virtual reality device is relatively high, that is, the switching rate of the virtual reality image displayed by the virtual reality device is relatively high, a relatively large image compression ratio is determined to ensure coherence of the virtual reality image. In this manner, accuracy of the determined image compression ratio is improved, and a requirement of a user can be better met.

The virtual reality host preliminarily determines an image compression ratio based on the current channel quality of the radio channel, and then the virtual reality host decides, based on the first motion information, whether the preliminarily determined image compression ratio can be used as the first image compression ratio to compress the virtual reality image. When the virtual reality device is in a stationary state, the virtual reality host directly determines the preliminarily determined image compression ratio as the first image compression ratio. When the virtual reality device is in a moving state, the virtual reality host adjusts the preliminarily determined image compression ratio based on the first motion information, and use an adjusted image compression ratio as the first image compression ratio. This manner is helpful to improve accuracy of the determined image compression ratio.

The channel quality of the radio channel between the virtual reality device and the virtual reality host is related to the motion information of the virtual reality device to some extent. For example, when the moving rate of the virtual reality device is relatively high, the channel quality is often unstable, and when the moving rate of the virtual reality device is relatively low, the channel quality is relatively stable. Therefore, in this application, the virtual reality host predicts the motion status of the virtual reality device in the future first duration. If it is determined that the virtual reality device is in a stationary state in the future first duration, that is, the channel quality of the radio channel between the virtual reality device and the virtual reality host is relatively stable, the virtual reality host directly determines the image compression ratio corresponding to the channel quality as the first image compression ratio. In this manner, accuracy of the determined image compression ratio is improved.

The virtual reality host predicts the motion status of the virtual reality device in the future first duration. If it is determined that the virtual reality device is in a moving state in the future first duration, it is inaccurate for the virtual reality host to directly use the image compression ratio corresponding to the detected channel quality as the first image compression ratio. Therefore, the virtual reality host adjusts, based on the first motion information, the image compression ratio corresponding to the detected channel quality. In this manner, accuracy of the determined image compression ratio is improved.

The virtual reality host may adjust, based on the moving rate of the virtual reality device, the image compression ratio corresponding to the detected channel quality. When the moving rate of the virtual reality device is relatively high, the virtual reality host increases the image compression ratio corresponding to the detected channel quality, to ensure coherence of the virtual reality image. When the moving rate of the virtual reality device is relatively low, the virtual reality host reduces the image compression ratio corresponding to the detected channel quality, to ensure quality of the virtual reality image. In this manner, accuracy of the determined image compression ratio is improved.

The virtual reality host preliminarily determines a modulation and coding scheme based on the channel quality of the radio channel, and then the virtual reality host decides, based on the first motion information, whether the preliminarily determined modulation and coding scheme can be used as the first modulation and coding scheme to perform modulation and coding on the compressed virtual reality image. For example, when the virtual reality device is in a stationary state, the virtual reality host may directly determine the preliminarily determined modulation and coding scheme as the first modulation and coding scheme. When the virtual reality device is in a moving state, the virtual reality host adjusts the preliminarily determined modulation and coding scheme based on the first motion information, and use an adjusted modulation and coding scheme as the first modulation and coding scheme. In this manner, accuracy of the determined modulation and coding scheme is improved.

The channel quality of the radio channel between the virtual reality device and the virtual reality host is related to the motion information of the virtual reality device to some extent. For example, when the moving rate of the virtual reality device is relatively high, the channel quality is often unstable, and when the moving rate of the virtual reality device is relatively low, the channel quality is relatively stable. Therefore, in this application, the virtual reality host predicts the motion status of the virtual reality device in the future first duration. If it is determined that the virtual reality device is in a stationary state in the future first duration, that is, the channel quality of the radio channel between the virtual reality device and the virtual reality host is relatively stable, the virtual reality host directly determines the modulation and coding scheme corresponding to the detected channel quality as the first modulation and coding scheme. In this manner, accuracy of the determined modulation and coding scheme is improved.

The virtual reality host predicts the motion status of the virtual reality device in the future first duration. If it is determined that the virtual reality device is in a moving state in the future first duration, it is inaccurate for the virtual reality host to directly use the modulation and coding scheme corresponding to the detected channel quality as the first modulation and coding scheme. Therefore, the virtual reality host adjusts, based on the first motion information, the modulation and coding scheme corresponding to the detected channel quality. In this manner, accuracy of the determined modulation and coding scheme is improved.

The virtual reality host adjusts, based on the moving rate of the virtual reality device, the modulation and coding scheme corresponding to the detected channel quality. For example, when the moving rate of the virtual reality device is relatively high, the virtual reality host determines a modulation and coding scheme with a relatively low modulation and coding rate to ensure coherence of the virtual reality image. When the moving rate of the virtual reality device is relatively low, the virtual reality host determines a modulation and coding scheme with a relatively high modulation and coding rate to ensure quality of the virtual reality image. In this manner, accuracy of the determined modulation and coding scheme is improved.

### DESCRIPTION OF DRAWINGS

FIG. 1 is an architectural diagram of a VR system according to this application;
FIG. 2 is a flowchart of a method for sending a virtual reality image according to this application;
FIG. 3 is a schematic diagram of beamforming of a virtual reality host and a virtual reality device according to this application;
FIG. 4 is a schematic structural diagram of an apparatus for sending a virtual reality image according to this application; and
FIG. 5 is a schematic structural diagram of another apparatus for sending a virtual reality image according to this application.

### DESCRIPTION OF EMBODIMENTS

The following clearly and completely describes the technical solutions provided by this application with reference to the accompanying drawings in this application.

In this application, an example in which a VR system includes a virtual reality host and a virtual reality device is used for description. In the following, some terms in this application are described, so as to help a person skilled in the art have a better understanding.
(1) A virtual reality host is an important device in a VR system, and is configured to generate a virtual reality image, or obtain a virtual reality image locally, from another electronic device, or a cloud, and send the virtual reality image to a virtual reality device. The virtual reality host may be an electronic device such as a television set, a notebook computer, or a smartphone. The virtual reality host may also be referred to as a virtual reality host, or the like.
(2) A virtual reality image may be a three-dimensional image. For example, the virtual reality image is generated by a virtual reality host based on a geometric model, or is converted from a solid model in a two-dimensional image.
(3) A virtual reality device includes a virtual reality display. For example, the virtual reality device is a head mounted display (Head Mounted Display, HMD). When a user wears the head mounted display, the virtual reality display is disposed in front of eyes of the user. The virtual reality display generally includes left and right glasses that are separated independently, so that information obtained by left and right eyes of a person is different. For example, different images of the left and right eyes are separately displayed on a left eye screen and a right eye screen. After human eyes obtain the information with differences, a stereo perception is generated in the mind.
(4) A beam (beam) is a communication resource. The beam may be a wide beam, a narrow beam, or a beam of another type. Different beams may be considered as different communication resources. Same information or different information may be sent by using different beams. A beamforming technology (Beamforming) means forming a specific beam in a specified direction when a radio signal is sent by using a plurality of antennas, to obtain a relatively large signal gain in an expected direction, so as to reduce power consumption and ensure signal quality. Generally, transmit beams generated by a transmit end may be distributed in different directions of 360 degrees in space, and receive beams generated by a receive end may also be distributed in different directions of 360 degrees in space. Beam training may be a process of beam alignment between the transmit beams generated by the transmit end and the receive beams generated by the receive end, an optimal transmit-receive beam is determined from the beam training, and the optimal transmit-receive beam is a radio channel between the transmit end and the receive end.
   In this application, the "beam" may also be referred to as a "transmission resource" or the like. That is, the name of the "beam" is not limited herein, as long as the foregoing concept is expressed.
(5) In addition, the term "and/or" in this specification describes only an association relationship for describing associated objects and represents that three relationships may exist. For example, A and/or B may represent the following three cases: only A exists, both A and B exist, and only B exists. In addition, the character "/" in this specification generally indicates an "or" relationship between the associated objects, if without special explanation. Moreover, in the description of this application, the words such as "first" and "second" are merely used for differentiated description, and should not be understood as an indication or implication of relative importance, or as an indication or implication of an order.

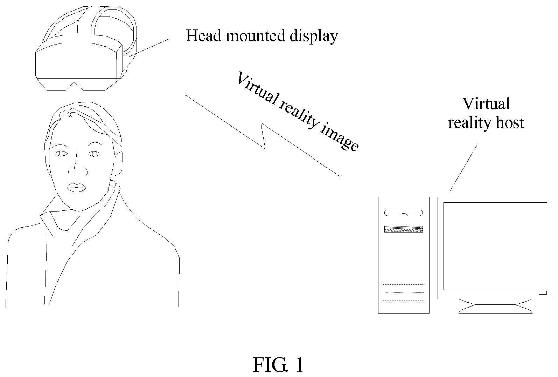

To better describe a method for sending a virtual reality image in this application, the following first describes an application scenario of this application, namely, a system architecture of a VR system. Refer to FIG. 1. As shown in FIG. 1, the VR system includes a virtual reality host and a virtual reality device, where an example of the virtual reality device is a head mounted display. The virtual reality host generates a virtual reality image, and then the virtual reality host sends the generated virtual reality image to the HMD. After receiving the virtual reality image, the HMD displays the virtual reality image. Therefore, a user wearing the HMD can view the virtual reality image.

At present, the virtual reality host usually transmits the virtual reality image to the virtual reality device through a radio channel, but a data volume of the virtual reality image that needs to be transmitted is very large. For example, a VR video has a picture size of 1000×1000 pixels, a 24-bit true color, a rate of 30 frames per second, and duration of 2 hours. If no compression is performed, a space of 648 GB (1000*1000*24*30*60*120=5.184×1012 bit≈648 GB) is required for storing this video. For example, if a bandwidth of the radio channel is 4 M, a minimum time required for transmitting the VR video is 360 hours, namely, 15 days. It can be learned that due to a limitation of the bandwidth of the radio channel and impact of a large data volume, the virtual reality image needs to be compressed to reduce a volume of transmitted data and improve transmission efficiency.

If the virtual reality image needs to be compressed, the virtual reality host needs to determine an image compression ratio. The following describes a manner of determining the image compression ratio in the current VR system.

At present, the virtual reality host determines the image compression ratio based on channel quality of the radio channel. The virtual reality host detects current channel quality of the radio channel. For example, if the current channel quality is poor, a relatively large image compression ratio is determined to reduce the volume of transmitted data.

However, the image compression ratio determined in this manner is inaccurate. For example, a switching rate of the virtual reality image is sometimes high and sometimes low, that is, content changes sometimes quickly and sometimes slowly. For a slow motion image or even a static virtual reality image, a user usually is relatively picky about image quality. Therefore, in this case, to ensure the image quality, a relatively large image compression ratio cannot be used to compress the virtual reality image. However, if the channel quality is always poor, the virtual reality host always compresses the virtual reality image by using a relatively large image compression ratio, and this eventually leads to poor image quality. It can be learned that the current manner of determining the image compression ratio is not accurate.

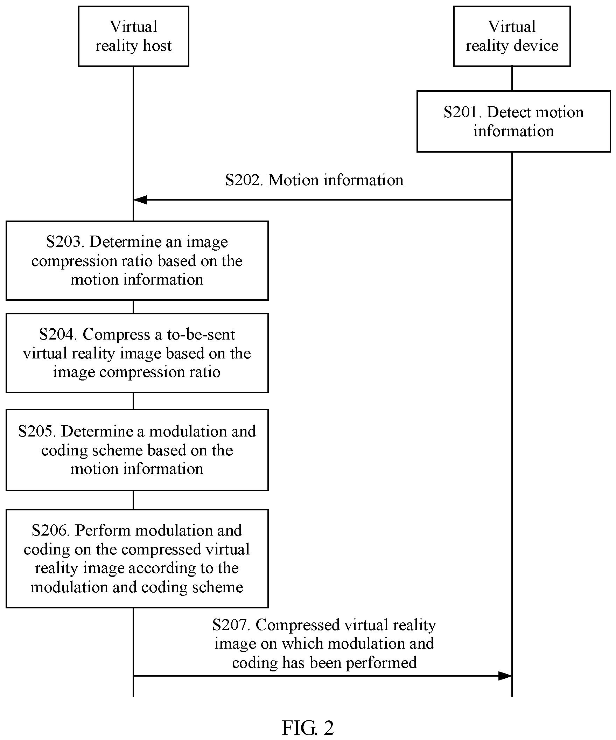

To resolve the technical problem, this application provides a method for sending a virtual reality image. That is, a virtual reality host determines an image compression ratio based on motion information of a virtual reality device. In the method, accuracy of a determined image compression ratio is improved. For details, refer to FIG. 2, which is a flowchart of a method for sending a virtual reality image according to this application. In the following description process, applying the method to the VR architecture shown in FIG. 1 is used as an example. Therefore, FIG. 2 may also be understood as a schematic diagram of information exchange between the virtual reality host and the HMD in the VR architecture shown in FIG. 1. A procedure of the method is described as follows.

S201. Detect motion information of the virtual reality device. The motion information is used to indicate a current motion status of the virtual reality device.

In this application, S201 may be completed by the virtual reality device, or may be completed by the virtual reality host. If S201 is completed by the virtual reality device, a motion sensor such as a gyroscope and an accelerometer may be disposed on the virtual reality device to detect the motion information. If S201 is completed by the virtual reality host, a camera or another optical sensor may be disposed on the virtual reality host, and a location moving size of the virtual reality device within a unit time is detected by using the camera or the optical sensor, so as to determine the motion information of the virtual reality device. Certainly, there may be another detection manner. This is not specifically limited in this application. In FIG. 2, detecting the motion information by using the virtual reality device is used as an example. The following description will continue to use detecting the motion information by the virtual reality device as an example.

In this application, the motion information may include one or more of location information, velocity information, acceleration information, angular velocity information, and angular acceleration information of the virtual reality device. The virtual reality device may detect the motion information periodically or in real time. Certainly, to reduce burden, the virtual reality device may alternatively detect the motion information only after receiving a motion information detection request sent by the virtual reality host, and does not detect the motion information without receiving the request. For example, when a VR application is just started, the virtual reality host may send a motion information detection request to the virtual reality host, and the virtual reality device detects the motion information after receiving the request. Alternatively, in a process in which a user experiences a VR application, the virtual reality host may send a motion information detection request to the virtual reality device every time before an image compression ratio is determined, and the virtual reality device detects the motion information after receiving the request.

S202. The virtual reality device sends the motion information to the virtual reality host, and correspondingly, the virtual reality host receives the motion information.

As mentioned above, the virtual reality device may detect the motion information periodically or in real time, or may detect the motion information after receiving a motion information detection request sent by the virtual reality host. Then, if the virtual reality device detects the motion information after receiving the motion information detection request sent by the virtual reality host, the virtual reality device may send the motion information to the virtual reality host after detecting the motion information. If the virtual reality device detects the motion information periodically or in real time, the virtual reality device may send the motion information to the virtual reality host after detecting the motion information every time, or may send, to the virtual reality host, latest detected motion information or all motion information detected in a latest time period after receiving the motion information detection request sent by the virtual reality host.

In this application, while sending the motion information, the virtual reality device may send information such as information about a time for generating the motion information by the virtual reality device and a device identifier of the virtual reality device. For example, in a multi-person VR interactive game, a plurality of users experience a same virtual game by wearing respective HMDs. In this case, generally, one virtual reality host needs to communicate with a plurality of HMDs, that is, the virtual reality host needs to send a virtual reality image to the plurality of HMDs, and the virtual reality host may also receive motion information sent by the plurality of HMDs. While sending its own motion information, each HMD may send a device identifier of the HMD that generates the motion information, so that the virtual reality host can identify which HMD in the plurality of HMDs sends the received motion information. For another example, the virtual reality host may receive a plurality of pieces of motion information sent by a same HMD. Therefore, while sending its own motion information, each HMD may send information about a time for generating the motion information by the HMD, so that the virtual reality host can identify a generation time of each piece of motion information in the plurality of pieces of motion information.

For example, the virtual reality host communicates with only one virtual reality device. If the virtual reality device further sends information about a time for generating motion information while sending the motion information, the virtual reality host may correspondingly store the motion information and the information about the time after receiving the motion information and the information about the time. If the virtual reality host receives a plurality of pieces of motion information, and each piece of motion information has a different generation time, when the virtual reality host needs to use motion information, the virtual reality host may select motion information of a latest time from the plurality of pieces of motion information, or may obtain an average value of all motion information in a period of time, and use the average value as required motion information. For example, the virtual reality host receives three pieces of motion information sent by the virtual reality device: a rate of 3 m/s, a rate of 4 m/s, and a rate of 3 m/s respectively, and simultaneously receives information about times for generating the three pieces of motion information: a time point of 00:10, a time point of 00:15, and a time point of 00:20 respectively. When the virtual reality host needs to use motion information, the virtual reality host may directly select motion information of a latest time, that is, a moving rate of the virtual reality device at 00:20 is 3 m/s, or the virtual reality host may obtain an average value of motion information in a period of time such as duration from 00:15 to 00:20, that is, obtain an average value (3.5 m/s) of 3 m/s and 4 m/s, and the virtual reality host determines 3.5 m/s as required motion information. The period of time mentioned herein may be determined based on an actual situation, and is not limited in this application.

S203. The virtual reality host determines an image compression ratio based on the motion information.

In this application, a possible implementation of S203 is as follows: The virtual reality host preliminarily determines an image compression ratio based on channel quality of a radio channel first, and then determines a final image compression ratio based on the motion information and the preliminarily determined image compression ratio. In this manner, two different factors, namely the channel quality and the motion information, are comprehensively considered, so that the determined image compression ratio is more accurate. The following specifically describes an implementation process of this manner.

In this manner, that the virtual reality host determines the final image compression ratio may be specifically completed by three steps. In the first step, a radio channel between the virtual reality host and the virtual reality device is determined; in the second step, an image compression ratio is preliminarily determined based on channel quality of the radio channel; and in the third step, a final image compression ratio is determined based on the motion information and the preliminarily determined image compression ratio.

The current VR system may be classified into two types: The first type is a VR system that performs data transmission by using a beamforming technology, for example, a VR system that implements data transmission by using a high-frequency-band (for example, 60 GHz) communication mode. The second type is a VR system that performs data transmission without using a beamforming technology, for example, a VR system that implements data transmission by using a low-frequency-band (for example, 30 GHz) communications technology.

For the VR system of the first type, a radio channel between the virtual reality host and the virtual reality device may vary. The virtual reality host and the virtual reality device may perform beam training before communication is established. The virtual reality host in the current VR system does not know a location of the virtual reality device. Therefore, the beam training between the virtual reality host and the virtual reality device requires separate searching within a 360-degree range, that is, a process of alignment between transmit beams (distributed at different angles within 360 degrees) generated by the virtual reality host and receive beams (distributed at different angles within 360 degrees) generated by the virtual reality device is required, and a transmit-receive beam formed after the alignment is the radio channel between the virtual reality host and the virtual reality device. It can be learned that the beam training between the virtual reality host and the virtual reality device in the current VR system of the first type takes a relatively long time, and consequently, an image transmission delay is excessively large.

Generally, a location of the virtual reality host is relatively fixed. Therefore, in this application, the virtual reality host may determine, within a range of a first angle based on location information of the virtual reality device, an optimal wireless transmission direction from at least one wireless transmission direction that is generated by the virtual reality device and is distributed in a 360-degree range. Only channel quality of a radio channel in the optimal wireless transmission direction needs to be detected, and a delay brought by beam training is shortened without searching in the 360-degree range.

In this application, the range of the first angle may be determined based on a moving distance between location information of the virtual reality device at a current moment and location information of the virtual reality device at a previous moment; or location information of the virtual reality device at a next moment may be predicted based on historical location information and current location information of the virtual reality device, and the range of the first angle is determined based on a moving distance between the predicted location information of the virtual reality device at the next moment and the location information of the virtual reality device at the current moment.

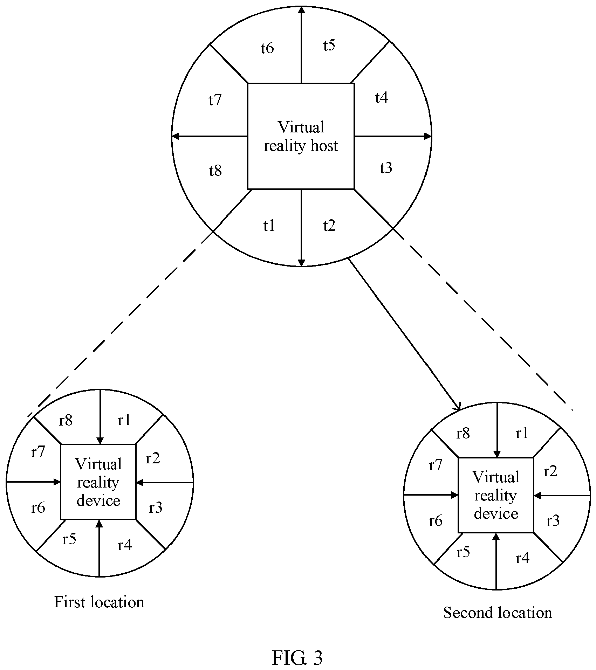

For example, refer to FIG. 3, transmit beams generated by the virtual reality host are in eight directions in a 360-degree range. As shown in the figure, the virtual reality device moves from a first location to a second location, and a moving distance, namely, a moving range between the first location and the second location is between two directions, namely, a direction t1 and a direction t2, of the transmit beams generated by the virtual reality host. In this case, the virtual reality host only needs to search, between the direction t1 and the direction t2, for a receive beam generated by the virtual reality device. For example, a search result is that an optimal radio channel determined by the virtual reality host is a transmit-receive beam (t2, r8).

For the VR system of the second type, because the beamforming technology is not used by the VR system of this type, searching in a beamforming direction is not needed. The radio channel between the virtual reality host and the virtual reality device in the VR system of this type is usually preset, so that the virtual reality host can directly perform the second step of S203.

After determining the radio channel, the virtual reality host enters the second step, namely, the virtual reality host preliminarily determines an image compression ratio based on channel quality of the radio channel. In the second step, the virtual reality host needs to detect the channel quality of the radio channel. There may be a plurality of specific implementations. For example, the virtual reality host detects the channel quality in real time or periodically, and the virtual reality host may store the detected channel quality. In this case, the virtual reality host may determine, from the stored channel quality, channel quality that is most recently detected. This manner is relatively simple. The virtual reality host does not need to specially detect the channel quality again, which helps improve efficiency. Alternatively, the virtual reality host may directly detect current channel quality, so that the determined channel quality is more accurate. Then, the virtual reality host preliminarily determines an image compression ratio based on a pre-stored mapping relationship between channel quality and an image compression ratio. There are a plurality of types of mapping relationships between channel quality of a radio channel and an image compression ratio. Table 1 is an example. In Table 1, a transmission rate of the radio channel is used as an example to show the channel quality of the radio channel.

**Table 1**

| Transmission rate of a radio channel | Image compression ratio |
|---|---|
| 5 Gbps | 2:1 |
| 4 Gbps | 4:1 |
| 3 Gbps | 6:1 |
| 2 Gbps | 8:1 |

For example, if the transmission rate, determined by the virtual reality host, of the radio channel is 4 Gbps, it can be preliminarily determined, according to Table 1, that the image compression ratio is 4: 1.

The following describes an implementation process of the third step, that is, the virtual reality host determines the final image compression ratio based on the motion information and the preliminarily determined image compression ratio. To improve accuracy of the determined image compression ratio, the virtual reality host may first predict a motion status of the virtual reality device in future first duration based on the received motion information. A reason why the virtual reality host predicts the motion status of the virtual reality device in the future first duration will be described later. Then, the virtual reality host determines the final image compression ratio based on the predicted motion status of the virtual reality device in the future first duration and the preliminarily determined image compression ratio. In addition, the motion status of the virtual reality device may be generally classified into two cases, namely, a stationary state or a moving state. Therefore, the implementation process of the third step is further divided into two cases: In the first case, when the virtual reality device is in a stationary state in the future first duration, how the virtual reality host determines the final image compression ratio; and in the second case, when the virtual reality device is in a moving state in the future first duration, how the virtual reality host determines the final image compression ratio.

Before the two cases are described, the reason why the virtual reality host predicts the motion status of the virtual reality device in the future first duration and an implementation are described first. Details are as follows:
In a process in which a user wears the virtual reality device to experience a virtual world, a motion status of the user changes over time, that is, the motion status of the virtual reality device changes over time. For example, if the virtual reality device detects that a current state is a stationary state, that is, a rate is 0 m/s, a process from sending, by the virtual reality device, the motion information, namely, the rate of 0 m/s to the virtual reality host to receiving, by the virtual reality device, a compressed virtual reality image sent by the virtual reality host may require specific duration. After the duration, the virtual reality device may have changed from the stationary state to a moving state. Therefore, to improve accuracy of the determined image compression ratio, the virtual reality host may predict the motion status of the virtual reality device in the future first duration.

For example, the virtual reality host receives, at 00:10, motion information and information about a time for generating the motion information by the virtual reality device that are sent by the virtual reality device, and specifically, a rate of the virtual reality device at 00:08 is 0 m/s. In this case, the virtual reality host can only determine that the virtual reality device is stationary at 00:08. If a process in which the virtual reality host compresses a virtual reality image and sends the compressed virtual reality image to the virtual reality device needs 5 seconds, the virtual reality device receives the compressed virtual reality image at 00:15, but the virtual reality device may have changed from a stationary state to a moving state at 00: 15. Therefore, to improve accuracy of the image compression ratio, the virtual reality host may predict the motion status of the virtual reality device in the first duration, for example, 5s, in the future based on the received motion information.

In this application, the first duration may be determined based on experience, or may be determined through calculation. If the first duration is determined through calculation, it may be learned, from the foregoing reason why the virtual reality host predicts the motion status of the virtual reality device in the future first duration, that the first duration may be duration required by the virtual reality device from a moment for generating motion information to a moment for receiving the compressed virtual reality image sent by the virtual reality host. The duration may be specifically a sum of three pieces of duration. The first piece of duration may be duration required by the virtual reality device to send the motion information to the virtual reality host, the second piece of duration may be duration required by the virtual reality host to compress the virtual reality image, and the third piece of duration may be duration required by the virtual reality host to send the compressed virtual reality image to the virtual reality device. The following describes calculation manners of the three pieces of duration separately. The first piece of duration may be a time difference between a time for receiving motion information by the virtual reality host and a time for generating the motion information by the virtual reality device. The second piece of duration may be obtained by multiplying a total quantity of frames of virtual reality images that need to be transmitted at a time by duration required for compressing one frame of a virtual reality image. The duration required for compressing one frame of a virtual reality image may be obtained through a test. For example, the virtual reality host may record a first moment before one frame of a virtual reality image is compressed, and a second moment at which compression is completed. A difference between the second moment and the first moment is the duration required for compressing one frame of a virtual reality image. The third piece of duration may be obtained by dividing a volume of data transmitted at a time by a transmission rate of a radio channel. The volume of the data transmitted at a time may be determined based on a total quantity of frames of transmitted virtual reality images and a volume of data included in each frame of a virtual reality image. After the three pieces of duration are determined, the first duration is obtained by adding up the three pieces of duration. Certainly, there may be another way for calculating the first duration, and this is not specifically limited in this application.

In this application, the virtual reality host may determine, based on the received motion information and the historical motion information of the virtual reality device, whether the virtual reality device is in a stationary state or in a moving state in the future first duration.

As mentioned above, if the virtual reality device, while sending the motion information, further sends the information about the time for generating the motion information, when receiving the motion information and the information about the time for generating the motion information, the virtual reality host may correspondingly store the motion information and the information about the time, so as to obtain information that the motion information of the virtual reality device changes over time, that is, to obtain the historical motion information of the virtual reality device.

Taking a VR game as an example, the historical motion information of the virtual reality device that is stored in the virtual reality host is as follows: For example, a rate of the virtual reality device at moment 00:00 is 0, a rate of the virtual reality device at moment 00:05 is 1 m/s, a rate of the virtual reality device at moment 00:10 is 2 m/s, a rate of the virtual reality device at moment 00:15 is 3 m/s, a rate of the virtual reality device at moment 00:20 is 2 m/s, a rate of the virtual reality device at moment 00:25 is 1 m/s, a rate of the virtual reality device at moment 00:30 is 0 m/s, a rate of the virtual reality device at moment 00:35 is 0 m/s, and a rate of the virtual reality device at moment 00:40 is 0 m/s.

Still taking the VR game as an example, the virtual reality host receives, at moment 00:14, motion information and information about a time for generating the motion information that are sent by the virtual reality device, and specifically, a rate of the virtual reality device at moment 00:12 is 2 m/s. If the first duration is 3s, the virtual reality host may learn, based on the historical motion information of the virtual reality device, that within 3s in the future, namely, at moment 00:15, a rate of the virtual reality host is 3 m/s. That is, it is determined that the virtual reality device is in a moving state. For another example, the virtual reality host receives, at moment 00:30, the motion information and the information about the time for generating the motion information that are sent by the virtual reality host, and specifically, a rate of the virtual reality device at moment 00:28 is 0 m/s. If the first duration is 3s, the virtual reality host may learn, based on the historical motion information of the virtual reality device, that within 3s in the future, namely, at moment 00:15, a rate of the virtual reality host is 0 m/s. That is, the virtual reality device is in a stationary state.

The following separately describes the two cases in the implementation process of the third step.

In the first case, when the virtual reality device is in a stationary state in the future first duration, how the virtual reality host determines the final image compression ratio.

It should be noted that the channel quality of the radio channel between the virtual reality host and the virtual reality device is related to the motion status of the virtual reality device to some extent. For example, when the virtual reality device moves quickly, stability of the channel is relatively poor, and the channel quality changes greatly. When the virtual reality device is stationary, usually the channel quality is relatively stable and only changes slightly. Therefore, when the virtual reality host determines that the virtual reality device is in a stationary state in the future first duration, it may be determined that the channel quality is relatively stable. In this case, the virtual reality host may directly determine the image compression ratio corresponding to detected channel quality of the radio channel as the final image compression ratio, that is, directly use the preliminarily determined image compression ratio as the final image compression ratio.

In the second case, when the virtual reality device is in a moving state in the future first duration, how the virtual reality host determines the final image compression ratio.

In this application, when the virtual reality device determines that the virtual reality device is in a moving state in the future first duration, the preliminarily determined image compression ratio may be adjusted based on motion information (the motion information herein is used to indicate a current motion status of the virtual reality device, and is not the historical motion information mentioned above). For example, if the motion information is used to indicate that a moving rate of the virtual reality device is relatively low, the virtual reality host appropriately reduces the image compression ratio based on the preliminarily determined image compression ratio. If the motion information is used to indicate that the moving rate of the virtual reality device is relatively high, the virtual reality host appropriately increases the image compression ratio based on the preliminarily determined image compression ratio.

This is because when the moving rate of the virtual reality device is relatively high, a switching rate of a virtual reality image displayed by the virtual reality device is relatively high, that is, content changes quickly. For a fast motion image, a user tends to ignore quality of an image, but pays attention to coherence and fluency of the image. Therefore, the coherence of the image may be ensured by increasing the image compression ratio, and then user experience is improved. However, when the moving rate of the virtual reality device is relatively low, the content of the virtual reality image displayed by the virtual reality device changes slowly. For a slow motion image or a static image, a user often has a relatively high requirement on the quality of the image, for example, a relatively high requirement on clarity and resolution of the image. In this case, the quality of the image may be improved by reducing the image compression ratio, and then user experience is improved.

For the second case, to improve accuracy of determining the image compression ratio, the virtual reality host may consider a change trend of the channel quality of the radio channel in the future first duration when adjusting the preliminarily determined image compression ratio based on the motion information. That is, the virtual reality host may adjust the preliminarily determined image compression ratio based on the motion information and the predicted change trend of the channel quality in the future first duration. Details are as follows:
If the motion information is used to indicate that the moving rate of the virtual reality device is relatively low, and the channel quality in the future first duration is improved, the virtual reality host appropriately reduces the image compression ratio based on the preliminarily determined image compression ratio. If the motion information is used to indicate that the moving rate of the virtual reality device is relatively high, and the channel quality in the future first duration is reduced, the virtual reality host appropriately increases the image compression ratio based on the preliminarily determined image compression ratio.

This is because when the moving rate of the virtual reality device is relatively high, the content of the virtual reality image displayed by the virtual reality device changes quickly. To ensure fluency of the virtual reality image, the virtual reality host increases the image compression ratio based on the preliminarily determined image compression ratio. However, after the image compression ratio is increased, a volume of transmitted data is greatly reduced. In this case, a transmission requirement can be met without good channel quality. Therefore, if the channel quality is reduced, transmission of the virtual reality image is not affected. When the moving rate of the virtual reality device is relatively low, the content of the virtual reality image displayed by the virtual reality device changes slowly. To ensure quality of the virtual reality image, the virtual reality host reduces the image compression ratio based on the preliminarily determined image compression ratio. However, after the image compression ratio is reduced, the volume of transmitted data may be greatly increased. If the channel quality of the radio channel is improved, transmission of the increased data volume is not affected. That is, the virtual reality host adjusts the image compression ratio based on the motion information and the change trend of the channel quality in the future first duration, so that accuracy of determining the image compression ratio can be further improved.

In practical application, the virtual reality host may adjust the image compression ratio based only on the motion information, or may adjust the image compression ratio based on the motion information and the change trend of the channel quality of the radio channel in the future first duration.

S204. The virtual reality host compresses a to-be-sent virtual reality image based on the image compression ratio.

In this application, the virtual reality host may compress each frame of a virtual reality image based on the determined final image compression ratio, or may package and compress a plurality of frames of virtual reality images together every time.

In this application, the virtual reality host determines the image compression ratio based on the motion information of the virtual reality device. For example, when the moving rate of the virtual reality device is relatively low, that is, when the content of the virtual reality image displayed by the virtual reality device changes slowly, a relatively small image compression ratio is determined to ensure quality of the virtual reality image. When the moving rate of the virtual reality device is relatively high, that is, the content of the virtual reality image displayed by the virtual reality device changes quickly, a relatively large image compression ratio is determined to ensure coherence of the virtual reality image. In this manner, accuracy of the determined image compression ratio is improved, and a requirement of a user can be better met.

In an actual operation process, before sending the virtual reality image, the virtual reality host needs to determine a modulation and coding scheme, and then performs modulation and coding on the virtual reality image according to the modulation and coding scheme. The following describes how the current VR system determines the modulation and coding scheme.

Currently, in the VR system, the virtual reality host determines the modulation and coding scheme based on the channel quality of the radio channel. For example, if the channel quality of the radio channel is relatively good, a modulation and coding scheme with a relatively high modulation and coding rate is determined. However, the modulation and coding scheme determined in this manner is inaccurate. This is because in practice each modulation and coding scheme is corresponding to its own modulation and coding rate, and the modulation and coding rate is related to a frame error rate generated in a transmission process of the virtual reality image. For example, when the modulation and coding rate is relatively high, although transmission efficiency is relatively high, a probability of occurrence of a frame error or a frame loss is relatively high. If the moving rate of the virtual reality device is relatively high, the content of the virtual reality image displayed by the virtual reality device changes quickly. To ensure fluency of the virtual reality image, the probability of a frame error or a frame loss needs to be reduced, and therefore, a modulation and coding scheme with a very high modulation and coding rate is not applicable. If the channel quality of the radio channel is always good, and the virtual reality host always uses a modulation and coding scheme with a relatively high modulation and coding rate, the probability of occurrence of a frame loss and a frame error is very high. Once a frame loss occurs, a virtual reality image viewed by a user is not coherent. It can be learned that currently, in the VR system, the modulation and coding scheme determined by the virtual reality host based on the channel quality is inaccurate. The following describes a process of determining the modulation and coding scheme in this application.

S205. The virtual reality host determines the modulation and coding scheme based on the motion information.

An execution sequence between S205 and S203 or S204 is not limited, provided that S205 occurs after S202. FIG. 2 is an example in which S205 occurs after S204.

Similar to S203, a possible implementation of S205 is as follows: The virtual reality host preliminarily determines a modulation and coding scheme based on the channel quality of the radio channel first, and then determines a final modulation and coding scheme based on the motion information and the preliminarily determined modulation and coding scheme. In this manner, two different factors, namely, the channel quality and the motion information, are comprehensively considered, so that the determined modulation and coding scheme is more accurate. The following describes in detail an implementation process of this manner.

In this manner, the virtual reality host may determine the final modulation and coding scheme in two steps. In the first step, the radio channel between the virtual reality host and the virtual reality device is determined; in the second step, a modulation and coding scheme is preliminarily determined based on the channel quality of the radio channel; and in the third step, a final modulation and coding scheme is determined based on the motion information and the preliminarily determined modulation and coding scheme.

For an implementation process of the first step, refer to the description about the first step in S203. For brevity of the specification, details are not described herein again.

In an implementation process of the second step, the virtual reality host first needs to determine the channel quality and a mapping relationship between channel quality and a modulation and coding scheme. The mapping relationship between channel quality and a modulation and coding scheme may be pre-stored by the virtual reality host. Therefore, the virtual reality host mainly needs to determine the channel quality. The manner of determining the channel quality by the virtual reality host has been described above. Then, the virtual reality host preliminarily determines a modulation and coding scheme based on the stored mapping relationship between channel quality and a modulation and coding scheme. There are a plurality of types of mapping relationships between channel quality of a radio channel and a modulation and coding scheme. Table 2 is an example. In addition, Table 2 is only an example of the mapping relationship between channel quality and a modulation and coding scheme, and is not a limitation on the mapping relationship between channel quality and a modulation and coding scheme. In Table 1, a transmission rate of the radio channel is used as an example to show the channel quality of the radio channel.

**Table 2**

| Transmission rate of a radio channel | Modulation and coding scheme | Modulation and coding rate |
|---|---|---|
| 2 Gbps | BPSK | 300 |
| 3 Gbps | QPSK | 400 |
| 4 Gbps | 16-QAM | 600 |
| 5 Gbps | 64-QAM | 700 |

In this application, the mapping relationship between channel quality of a radio channel and a modulation and coding scheme may use a modulation and coding scheme (Modulation and Coding Scheme, MCS) index table in the prior art, or may be a mapping relationship defined by a user.

For example, if a transmission rate, determined by the virtual reality host, of the radio channel is 4 Gbps, it can be preliminarily determined based on Table 2 that the modulation and coding scheme is 16-QAM.

The following describes an implementation process of the third step, that is, the virtual reality host determines the final modulation and coding scheme based on the motion information and the preliminarily determined modulation and coding scheme. Similar to S203, the virtual reality host predicts the motion status of the virtual reality device in the future first duration based on the received motion information; and then determines the final modulation and coding scheme based on the motion status and the preliminarily determined modulation and coding scheme. Therefore, the implementation process of the third step is also divided into two cases: In the first case, when the virtual reality device is in a stationary state in the future first duration, how the virtual reality host determines the final modulation and coding scheme. In the second case, when the virtual reality device is in a moving state in the future first duration, how the virtual reality host determines the final modulation and coding scheme. The reason why the virtual reality host predicts the motion status of the virtual reality device in the future first duration and the implementation are described above, and are not described herein again. Therefore, the following directly describes the two cases of the implementation process of the second step.

In the first case, when the virtual reality device is in a stationary state in the future first duration, how the virtual reality host determines the final modulation and coding scheme.

As mentioned above, the channel quality of the radio channel between the virtual reality host and the virtual reality device is related to the motion status of the virtual reality device to some extent. When the virtual reality host determines that the virtual reality device is in a stationary state in the future first duration, it may be determined that the channel quality is relatively stable. In this case, the virtual reality host may directly determine the modulation and coding scheme corresponding to the detected channel quality of the radio channel as the final modulation and coding scheme.

In the second case, when the virtual reality device is in a moving state in the future first duration, how the virtual reality host determines the final modulation and coding scheme.

In this application, when the virtual reality device determines that the virtual reality device is in a moving state in the future first duration, the virtual reality host may adjust the preliminarily determined modulation and coding scheme based on the motion information. For example, if the motion information is used to indicate that the moving rate of the virtual reality device is relatively low, the virtual reality host adjusts the preliminarily determined modulation and coding scheme to a first modulation and coding scheme, where a modulation and coding rate of the first modulation and coding scheme is greater than or equal to a modulation and coding rate of the preliminarily determined modulation and coding scheme. If the motion information is used to indicate that the moving rate of the virtual reality device is relatively high, the virtual reality host adjusts the preliminarily determined modulation and coding scheme to a second modulation and coding scheme, where a modulation and coding rate of the second modulation and coding scheme is less than the modulation and coding rate of the preliminarily determined modulation and coding scheme.

This is because when the moving rate of the virtual reality device is relatively high, that is, the content of the virtual reality image displayed by the virtual reality device changes quickly, a quantity of frames of virtual reality images transmitted each time is relatively large. To ensure coherence and fluency of the virtual reality image, reduce the probability of occurrence of a frame error or a frame loss, and avoid image retransmission, the virtual reality host may determine a modulation and coding scheme with a relatively low modulation and coding rate. When the moving rate of the virtual reality device is relatively low, the content of the virtual reality image displayed by the virtual reality device changes slowly, content of the virtual reality image transmitted each time changes little, and a quantity of frames of virtual reality images that need to be transmitted each time is relatively small. In this case, a modulation and coding scheme with a very low modulation and coding rate is not needed. Therefore, the virtual reality host may determine a modulation and coding scheme with a relatively high modulation and coding rate, and then transmission efficiency is improved. Alternatively, when the moving rate of the virtual reality device is relatively low, the radio channel also changes slowly, and the detected channel quality is relatively accurate. Therefore, the virtual reality host may directly determine the modulation and coding scheme corresponding to the detected channel quality as the final modulation and coding scheme.

S206. The virtual reality host performs modulation and coding on the compressed virtual reality image according to the modulation and coding scheme.

In this application, if the virtual reality host compresses each frame of a virtual reality image, the virtual reality host may perform modulation and coding on each frame of a compressed virtual reality image according to the final modulation and coding scheme. If the virtual reality host packages and compresses a plurality of frames of virtual reality images together, the virtual reality host may perform modulation and coding on a compressed package of the virtual reality image according to the final modulation and coding scheme.

S207. The virtual reality host sends the compressed virtual reality image on which modulation and coding has been performed to the virtual reality device, and correspondingly, the virtual reality device receives the virtual reality image on which modulation and coding has been performed.

After receiving the compressed virtual reality image on which modulation and coding has been performed, the virtual reality device performs demodulation and decoding on the virtual reality image to obtain the compressed virtual reality image, decompresses the compressed virtual reality image, and finally displays the virtual reality image.

In this application, the virtual reality host determines the modulation and coding scheme based on the motion information of the virtual reality device. For example, when the moving rate of the virtual reality device is relatively high, the switching rate of the virtual reality image displayed by the virtual reality device is relatively high. To ensure coherence and fluency of the virtual reality image, reduce a probability of occurrence of a frame error or a frame loss, and avoid image retransmission, the virtual reality host may determine a modulation and coding scheme with a relatively low modulation and coding rate. When the moving rate of the virtual reality device is relatively low, that is, a quantity of frames of virtual reality images transmitted each time is relatively small, the virtual reality host may determine a modulation and coding scheme with a relatively high modulation and coding rate or directly determine a modulation and coding scheme based on the channel quality of the radio channel, and then transmission efficiency is improved. In this manner, accuracy of the determined modulation and coding scheme is improved, and a requirement of a user can be better met.

In summary, in this application, the virtual reality host determines the image compression ratio and the modulation and coding scheme based on the motion information of the virtual reality device. For example, when the moving rate of the virtual reality device is relatively low, that is, the content of the virtual reality image displayed by the virtual reality device changes slowly, a relatively small image compression ratio is determined at this time, and a modulation and coding scheme may be directly determined based on current channel quality. When the moving rate of the virtual reality device is relatively high, that is, the content of the virtual reality image displayed by the virtual reality device changes quickly, for a flash motion image, a human eye has a lower requirement on image quality. Therefore, a relatively large image compression ratio may be determined at this time to ensure coherence of the virtual reality image. In addition, the virtual reality host determines a modulation and coding scheme with a relatively low modulation and coding rate to doubly ensure the coherence of the virtual reality image. Therefore, in the method for sending a virtual reality image provided in this application, the virtual reality host may determine the image compression ratio and the modulation and coding scheme based on the motion information of the virtual reality device, so as to ensure quality of the virtual reality image, improve transmission efficiency, and better meet a requirement of a user.

The following describes a device, provided in this application, with reference to the accompanying drawings.

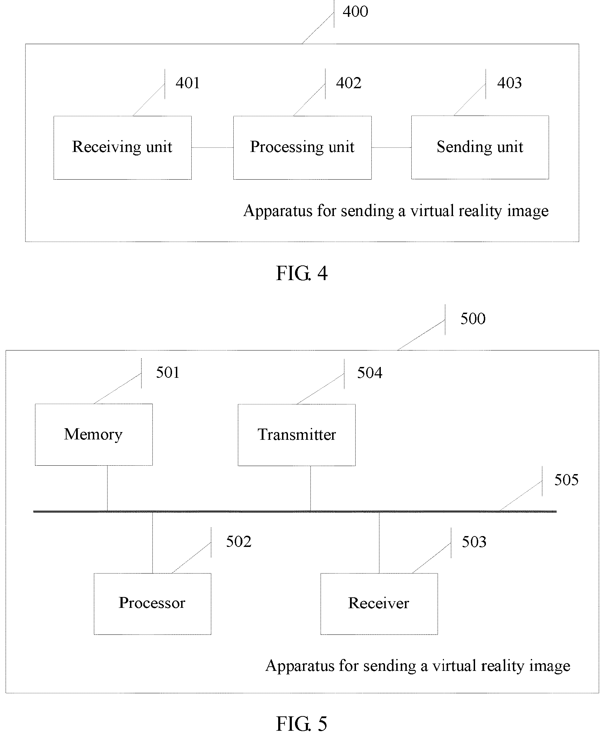

FIG. 4 is a schematic structural diagram of an apparatus 400 for sending a virtual reality image. The apparatus 400 for sending a virtual reality image may implement a function of the virtual reality host mentioned above. The apparatus 400 for sending a virtual reality image may include a receiving unit 401, a processing unit 402, and a sending unit 403. The receiving unit 401 may be configured to perform S202 in the embodiment shown in FIG. 2, and/or configured to support another process of the technology described in this specification. The processing unit 402 may be configured to perform S203 to S206 in the embodiment shown in FIG. 2, and/or configured to support another process of the technology described in this specification. The sending unit 403 may be configured to perform S207 in the embodiment shown in FIG. 2, and/or configured to support another process of the technology described in this specification. All related content of steps in the foregoing method embodiments may be cited in function descriptions of corresponding function modules. Details are not described herein again.

It should be noted that, in this application, the apparatus for sending a virtual reality image is displayed in a form of a functional unit. Without limitation, the term "unit" as used herein may refer to an application-specific integrated circuit (application-specific integrated circuit, ASIC), an electronic circuit, a (shared, dedicated, or packet) processor, and a memory that execute one or more software or firmware programs, a combined logic circuit, and/or another suitable component that provides the function.

In a simple embodiment, a person skilled in the art may figure out that the apparatus 400 for sending a virtual reality image may be further implemented by using a structure shown in FIG. 5.

As shown in FIG. 5, an apparatus 500 for sending a virtual reality image may include a memory 501, a processor 502, a receiver 503, a transmitter 504, and a bus 505. The memory 501, the processor 502, the receiver 503, and the transmitter 504 may be connected by using the bus 505. The receiver 503 is configured to receive first motion information sent by a virtual reality device, where the first motion information is used to indicate a current motion status of the virtual reality device. The processor 502 is configured to determine a first image compression ratio based on the first motion information, and compress a to-be-sent virtual reality image based on the first image compression ratio. The transmitter 504 is configured to send the compressed virtual reality image to the virtual reality device. For a specific implementation of operations performed by the processor 502, the receiver 503, and the transmitter 504, refer to corresponding steps performed by the virtual reality host in the embodiment of FIG. 2. Details are not described again in this application.

The memory 501 is configured to store a computer executable instruction. When the apparatus 500 for sending a virtual reality image is operating, the processor 502 executes the computer executable instruction stored in the memory 501 to implement the foregoing function, so as to implement the method for sending a virtual reality image provided in the embodiment shown in FIG. 2. For a specific image shooting method, refer to related descriptions in the foregoing and the accompanying drawings. Details are not described herein again.

In this application, the processor 502 may be a field-programmable gate array (field-programmable gate array, FPGA), an application-specific integrated circuit (application-specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip. The bus 505 may be a peripheral component interconnect (peripheral component interconnect, PCI) bus, an extended industry standard architecture (extended industry standard architecture, EISA) bus, or the like. The bus 505 may be classified into an address bus, a data bus, a control bus, and the like. For ease of representation, only one thick line is used to represent the bus in FIG. 5, but this does not mean that there is only one bus or only one type of bus.

All or some of the foregoing embodiments of the foregoing present invention may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a Solid State Disk (SSD)), and or the like.

The foregoing descriptions are merely specific implementations of this application, but are not intended to limit the protection scope of this application. The protection scope of this application shall be subject to the protection scope of the claims.

## Claims

1. A method for sending a virtual reality image, comprising:
receiving (S202), by a virtual reality host, first motion information sent by a virtual reality device, wherein the first motion information is used to indicate a current motion status of the virtual reality device;
determining (S203), by the virtual reality host, a first image compression ratio based on the first motion information;
compressing (S204), by the virtual reality host, a to-be-sent virtual reality image based on the first image compression ratio; and
sending (S207), by the virtual reality host, the compressed virtual reality image to the virtual reality device;
wherein before the determining, by the virtual reality host, a first image compression ratio based on the first motion information, the method further comprises:
detecting, by the virtual reality host, current channel quality of a radio channel, wherein the radio channel is a communication channel between the virtual reality device and the virtual reality host; and
determining, by the virtual reality host based on a mapping relationship between channel quality of a radio channel and an image compression ratio, an image compression ratio corresponding to the detected channel quality; and
the determining, by the virtual reality host, a first image compression ratio based on the first motion information comprises:
determining, by the virtual reality host based on the first motion information, the image compression ratio corresponding to the detected channel quality as the first image compression ratio; or adjusting, by the virtual reality host based on the first motion information, the image compression ratio corresponding to the detected channel quality, and using an adjusted image compression ratio as the first image compression ratio;
**characterized by**:
wherein after the detecting, by the virtual reality host, current channel quality of a radio channel, the method further comprises:
determining, by the virtual reality host based on a mapping relationship between channel quality of a radio channel and a modulation and coding scheme, a modulation and coding scheme corresponding to the detected channel quality; and
determining (S205), by the virtual reality host based on the first motion information, the modulation and coding scheme corresponding to the detected channel quality as a first modulation and coding scheme; or adjusting, by the virtual reality host based on the first motion information, the modulation and coding scheme corresponding to the detected channel quality, and using an adjusted modulation and coding scheme as a first modulation and coding scheme;
before the sending, by the virtual reality host, the compressed virtual reality image to the virtual reality device, the method further comprises:
performing (S206), by the virtual reality host, modulation and coding on the compressed virtual reality image according to the first modulation and coding scheme; and
the sending, by the virtual reality host, the compressed virtual reality image to the virtual reality device comprises:
sending, by the virtual reality host, the compressed virtual reality image on which modulation and coding has been performed to the virtual reality device;
wherein the determining, by the virtual reality host based on the first motion information, the modulation and coding scheme corresponding to the detected channel quality as a first modulation and coding scheme comprises:
determining, by the virtual reality host, the modulation and coding scheme corresponding to the detected channel quality as the first modulation and coding scheme if determining, based on the first motion information and the historical motion information of the virtual reality device, that the virtual reality device is in a stationary state in the future first duration; and
wherein the adjusting, by the virtual reality host based on the first motion information, the modulation and coding scheme corresponding to the detected channel quality comprises:
adjusting, by the virtual reality host based on the first motion information, the modulation and coding scheme corresponding to the detected channel quality if determining, based on the first motion information and the historical motion information of the virtual reality device, that the virtual reality device is in a moving state in the future first duration;
wherein the adjusting, by the virtual reality host based on the first motion information, the modulation and coding scheme corresponding to the detected channel quality comprises:
adjusting, by the virtual reality host, the modulation and coding scheme corresponding to the detected channel quality to a second modulation and coding scheme if the first motion information is used to indicate that the moving rate of the virtual reality device is less than or equal to a first rate, wherein a modulation and coding rate of the second modulation and coding scheme is greater than a modulation and coding rate of the modulation and coding scheme corresponding to the detected channel quality; or
adjusting, by the virtual reality host, the modulation and coding scheme corresponding to the detected channel quality to a third modulation and coding scheme if the first motion information is used to indicate that the moving rate of the virtual reality device is greater than a second rate, wherein a modulation and coding rate of the third modulation and coding scheme is less than a modulation and coding rate of the modulation and coding scheme corresponding to the detected channel quality; wherein
the first rate is less than the second rate.

2. The method according to claim 1, wherein the determining, by the virtual reality host based on the first motion information, the image compression ratio corresponding to the detected channel quality as the first image compression ratio comprises:
determining, by the virtual reality host, the image compression ratio corresponding to the detected channel quality as the first image compression ratio if determining, based on the first motion information and historical motion information of the virtual reality device, that the virtual reality device is in a stationary state in future first duration.

3. The method according to claim 1, wherein the adjusting, by the virtual reality host based on the first motion information, the image compression ratio corresponding to the detected channel quality comprises:
adjusting, by the virtual reality host based on the first motion information, the image compression ratio corresponding to the detected channel quality if determining, based on the first motion information and historical motion information of the virtual reality device, that the virtual reality device is in a moving state in future first duration.

4. The method according to claim 1 or 3, wherein the adjusting, by the virtual reality host based on the first motion information, the image compression ratio corresponding to the detected channel quality comprises:
reducing, by the virtual reality host, the image compression ratio corresponding to the detected channel quality if the first motion information is used to indicate that a moving rate of the virtual reality device is less than or equal to a first rate; or
increasing, by the virtual reality host, the image compression ratio corresponding to the detected channel quality if the first motion information is used to indicate that a moving rate of the virtual reality device is greater than a second rate; wherein
the first rate is less than or equal to the second rate.

5. An apparatus for sending a virtual reality image, comprising:
a receiving unit (401), configured to receive first motion information sent by a virtual reality device, wherein the first motion information is used to indicate a current motion status of the virtual reality device;
a processing unit (402), configured to determine a first image compression ratio based on the first motion information, and compress a to-be-sent virtual reality image based on the first image compression ratio; and
a sending unit (403), configured to send the compressed virtual reality image to the virtual reality device;
wherein the processing unit is further configured to:
detect current channel quality of a radio channel, wherein the radio channel is a communication channel between the virtual reality device and the apparatus for sending a virtual reality image; and
determine, based on a mapping relationship between channel quality of a radio channel and an image compression ratio, an image compression ratio corresponding to the detected channel quality; and
the processing unit is specifically configured to:
determine, based on the first motion information, the image compression ratio corresponding to the detected channel quality as the first image compression ratio; or adjust, based on the first motion information, the image compression ratio corresponding to the detected channel quality, and use an adjusted image compression ratio as the first image compression ratio;
**characterised by**:
wherein the processing unit is further configured to
determine, based on a mapping relationship between channel quality of a radio channel and a modulation and coding scheme, a modulation and coding scheme corresponding to the detected channel quality;
determine, based on the first motion information, the modulation and coding scheme corresponding to the detected channel quality as a first modulation and coding scheme; or adjust, based on the first motion information, the modulation and coding scheme corresponding to the detected channel quality, and use an adjusted modulation and coding scheme as a first modulation and coding scheme; and
perform modulation and coding on the compressed virtual reality image according to the first modulation and coding scheme; and
the sending unit is specifically configured to: send the compressed virtual reality image on which modulation and coding has been performed to the virtual reality device;
wherein the processing unit is specifically configured to:
determine the modulation and coding scheme corresponding to the detected channel quality as the first modulation and coding scheme if determining, based on the first motion information and the historical motion information of the virtual reality device, that the virtual reality device is in a stationary state in the future first duration; and
wherein the processing unit is specifically configured to:
adjust, based on the first motion information, the modulation and coding scheme corresponding to the detected channel quality if determining, based on the first motion information and the historical motion information of the virtual reality device, that the virtual reality device is in a moving state in the future first duration;
wherein the processing unit is specifically configured to:
adjust the modulation and coding scheme corresponding to the detected channel quality to a second modulation and coding scheme if the first motion information is used to indicate that the moving rate of the virtual reality device is less than or equal to a first rate, wherein a modulation and coding rate of the second modulation and coding scheme is greater than a modulation and coding rate of the modulation and coding scheme corresponding to the detected channel quality; or
adjust the modulation and coding scheme corresponding to the detected channel quality to a third modulation and coding scheme if the first motion information is used to indicate that the moving rate of the virtual reality device is greater than a second rate, wherein a modulation and coding rate of the third modulation and coding scheme is less than the modulation and coding rate of the modulation and coding scheme corresponding to the detected channel quality; wherein
the first rate is less than the second rate.

6. The apparatus according to claim 5, wherein the processing unit is specifically configured to:
determine the image compression ratio corresponding to the detected channel quality as the first image compression ratio if determining, based on the first motion information and historical motion information of the virtual reality device, that the virtual reality device is in a stationary state in future first duration.

7. The apparatus according to claim 5, wherein the processing unit is specifically configured to:
adjust, based on the first motion information, the image compression ratio corresponding to the detected channel quality if determining, based on the first motion information and historical motion information of the virtual reality device, that the virtual reality device is in a moving state in future first duration.

8. The apparatus according to claim 5 or 7, wherein the processing unit is specifically configured to:
reduce the image compression ratio corresponding to the detected channel quality if the first motion information is used to indicate that a moving rate of the virtual reality device is less than or equal to a first rate; or
increase the image compression ratio corresponding to the detected channel quality if the first motion information is used to indicate that a moving rate of the virtual reality device is greater than a second rate; wherein
the first rate is less than or equal to the second rate.

9. A computer program product comprising a set of instructions, which when runs on a computer causes the computer to perform the method according to any one of claims 1 to 4.

## Patentansprüche

1. Verfahren zum Senden eines Virtual-Reality-Bildes, Folgendes umfassend:
Empfangen (S202) erster Bewegungsinformationen, die durch ein Virtual-Reality-Gerät gesendet werden, durch einen Virtual-Reality-Host, wobei die ersten Bewegungsinformationen dazu verwendet werden, einen aktuellen Bewegungsstatus des Virtual-Reality-Geräts anzugeben;
Bestimmen (S203) eines ersten Bildkomprimierungsverhältnisses auf Grundlage der ersten Bewegungsinformationen durch den Virtual-Reality-Host;
Komprimieren (S204) eines zu sendenden Virtual-Reality-Bildes auf Grundlage des ersten Bildkomprimierungsverhältnisses durch den Virtual-Reality-Host; und
Senden (S207) des komprimierten Virtual-Reality-Bildes durch den Virtual-Reality-Host an das Virtual-Reality-Gerät;
wobei vor dem Bestimmen eines ersten Bildkomprimierungsverhältnisses durch den Virtual-Reality-Host auf Grundlage der ersten Bewegungsinformationen das Verfahren ferner Folgendes umfasst:
Erfassen der aktuellen Kanalqualität eines Funkkanals durch den Virtual-Reality-Host, wobei es sich bei dem Funkkanal um einen Kommunikationskanal zwischen dem Virtual-Reality-Gerät und dem Virtual-Reality-Host handelt; und
Bestimmen eines Bildkomprimierungsverhältnisses, das der erfassten Kanalqualität entspricht, durch den Virtual-Reality-Host auf Grundlage einer Abbildungsbeziehung zwischen der Kanalqualität eines Funkkanals und einem Bildkomprimierungsverhältnis; und
wobei das Bestimmen eines ersten Bildkomprimierungsverhältnisses auf Grundlage der ersten Bewegungsinformationen durch den Virtual-Reality-Host Folgendes umfasst:
Bestimmen des Bildkomprimierungsverhältnisses, das der erfassten Kanalqualität entspricht, als das erste Bildkomprimierungsverhältnis durch den Virtual-Reality-Host auf Grundlage der ersten Bewegungsinformationen; oder Einstellen des Bildkomprimierungsverhältnisses, das der erfassten Kanalqualität entspricht, durch den Virtual-Reality-Host auf Grundlage der ersten Bewegungsinformationen und Verwenden eines eingestellten Bildkomprimierungsverhältnisses als das erste Bildkomprimierungsverhältnis;
**gekennzeichnet durch**:
wobei nach dem Erfassen der aktuellen Kanalqualität eines Funkkanals durch den Virtual-Reality-Host das Verfahren ferner Folgendes umfasst:
Bestimmen eines Modulations- und Codierungsschemas, das der erfassten Kanalqualität entspricht, durch den Virtual-Reality-Host auf Grundlage einer Abbildungsbeziehung zwischen der Kanalqualität eines Funkkanals und einem Modulations- und Codierungsschema; und
Bestimmen (S205) des Modulations- und Codierungsschemas, das der erfassten Kanalqualität entspricht, als ein erstes Modulations- und Codierungsschema durch den Virtual-Reality-Host auf Grundlage der ersten Bewegungsinformationen; oder Einstellen des Modulations- und Codierungsschemas, das der erfassten Kanalqualität entspricht, durch den Virtual-Reality-Host auf Grundlage der ersten Bewegungsinformationen, und Verwenden eines eingestellten Modulations- und Codierungsschemas als ein erstes Modulations- und Codierungsschema;
wobei vor dem Senden des komprimierten Virtual-Reality-Bildes durch den Virtual-Reality-Host an das Virtual-Reality-Gerät das Verfahren ferner Folgendes umfasst:
Durchführen (S206) einer Modulation und Codierung an dem komprimierten Virtual-Reality-Bild durch den Virtual-Reality-Host gemäß dem ersten Modulations- und Codierungsschema; und
wobei das Senden des komprimierten Virtual-Reality-Bildes durch den Virtual-Reality-Host an das Virtual-Reality-Gerät Folgendes umfasst:
Senden des komprimierten Virtual-Reality-Bildes, an dem die Modulation und Codierung durchgeführt wurden, durch den Virtual-Reality-Host an das Virtual-Reality-Gerät;
wobei das Bestimmen des Modulations- und Codierungsschemas, das der erfassten Kanalqualität entspricht, als ein erstes Modulations- und Codierungsschema durch den Virtual-Reality-Host auf Grundlage der ersten Bewegungsinformationen Folgendes umfasst:
Bestimmen des Modulations- und Codierungsschemas, das der erfassten Kanalqualität entspricht, als das erste Modulations- und Codierungsschema durch den Virtual-Reality-Host, wenn auf Grundlage der ersten Bewegungsinformationen und der historischen Bewegungsinformationen des Virtual-Reality-Geräts bestimmt wird, dass sich das Virtual-Reality-Gerät in der zukünftigen ersten Zeitdauer in einem stationären Zustand befindet; und
wobei das Einstellen des Modulations- und Codierungsschemas, das der erfassten Kanalqualität entspricht, durch den Virtual-Reality-Host auf Grundlage der ersten Bewegungsinformationen Folgendes umfasst:
Einstellen des Modulations- und Codierungsschemas, das der erfassten Kanalqualität entspricht, durch den Virtual-Reality-Host, wenn auf Grundlage der ersten Bewegungsinformationen und der historischen Bewegungsinformationen des Virtual-Reality-Geräts bestimmt wird, dass sich das Virtual-Reality-Gerät in der zukünftigen ersten Zeitdauer in einem sich bewegenden Zustand befindet;
wobei das Einstellen des Modulations- und Codierungsschemas, das der erfassten Kanalqualität entspricht, durch den Virtual-Reality-Host auf Grundlage der ersten Bewegungsinformationen Folgendes umfasst:
Einstellen des Modulations- und Codierungsschemas, das der erfassten Kanalqualität entspricht, auf ein zweites Modulations- und Codierungsschema durch den Virtual-Reality-Host, wenn die ersten Bewegungsinformationen verwendet werden, um anzuzeigen,
dass die Bewegungsrate des Virtual-Reality-Geräts geringer als oder gleich einer ersten Rate ist, wobei eine Modulations- und Codierungsrate des zweiten Modulations- und Codierungsschemas größer als eine Modulations- und Codierungsrate des Modulations- und Codierungsschemas ist, das der erfassten Kanalqualität entspricht; oder
Einstellen des Modulations- und Codierungsschemas, das der erfassten Kanalqualität entspricht, auf ein drittes Modulations- und Codierungsschema durch den Virtual-Reality-Host, wenn die ersten Bewegungsinformationen verwendet werden, um anzuzeigen, dass die Bewegungsrate des Virtual-Reality-Geräts größer als eine zweite Rate ist, wobei eine Modulations- und Codierungsrate des dritten Modulations- und Codierungsschemas geringer als eine Modulations- und Codierungsrate des Modulations- und Codierungsschemas ist, das der erfassten Kanalqualität entspricht; wobei
die erste Rate geringer als die zweite Rate ist.

2. Verfahren nach Anspruch 1, wobei das Bestimmen des Bildkomprimierungsverhältnisses, das der erfassten Kanalqualität entspricht, als das erste Bildkomprimierungsverhältnis durch den Virtual-Reality-Host auf Grundlage der ersten Bewegungsinformationen Folgendes umfasst: Bestimmen des Bildkomprimierungsverhältnisses, das der erfassten Kanalqualität entspricht, als das erste Bildkomprimierungsverhältnis durch den Virtual-Reality-Host, wenn auf Grundlage der ersten Bewegungsinformationen und historischer Bewegungsinformationen des Virtual-Reality-Geräts bestimmt wird, dass sich das Virtual-Reality-Gerät in einer zukünftigen ersten Zeitdauer in einem stationären Zustand befindet.

3. Verfahren nach Anspruch 1, wobei das Einstellen des Bildkomprimierungsverhältnisses, das der erfassten Kanalqualität entspricht, durch den Virtual-Reality-Host auf Grundlage der ersten Bewegungsinformationen Folgendes umfasst: Einstellen des Bildkomprimierungsverhältnisses, das der erfassten Kanalqualität entspricht, durch den Virtual-Reality-Host auf Grundlage der ersten Bewegungsinformationen, wenn auf Grundlage der ersten Bewegungsinformationen und historischer Bewegungsinformationen des Virtual-Reality-Geräts bestimmt wird, dass sich das Virtual-Reality-Gerät in einer zukünftigen ersten Zeitdauer in einem sich bewegenden Zustand befindet.

4. Verfahren nach Anspruch 1 oder 3, wobei das Einstellen des Bildkomprimierungsverhältnisses, das der erfassten Kanalqualität entspricht, durch den Virtual-Reality-Host auf Grundlage der ersten Bewegungsinformationen Folgendes umfasst:
Reduzieren des Bildkomprimierungsverhältnisses, das der erfassten Kanalqualität entspricht, durch den Virtual-Reality-Host, wenn die ersten Bewegungsinformationen dazu verwendet werden, anzugeben, dass eine Bewegungsrate des Virtual-Reality-Geräts geringer oder gleich einer ersten Rate ist; oder
Erhöhen des Bildkomprimierungsverhältnisses, das der erfassten Kanalqualität entspricht, durch den Virtual-Reality-Host, wenn die ersten Bewegungsinformationen dazu verwendet werden, anzugeben, dass eine Bewegungsrate des Virtual-Reality-Geräts größer als eine zweite Rate ist; wobei
die erste Rate geringer als oder gleich der zweiten Rate ist.

5. Vorrichtung zum Senden eines Virtual-Reality-Bildes, Folgendes umfassend:
eine Empfangseinheit (401), die zum Empfangen erster Bewegungsinformationen konfiguriert ist, die durch ein Virtual-Reality-Gerät gesendet werden, wobei die ersten Bewegungsinformationen dazu verwendet werden, einen aktuellen Bewegungsstatus des Virtual-Reality-Geräts anzugeben;
eine Verarbeitungseinheit (402), die dazu konfiguriert ist, ein erstes Bildkomprimierungsverhältnis auf Grundlage der ersten Bewegungsinformationen zu bestimmen und ein zu sendendes Virtual-Reality-Bild auf Grundlage des ersten Bildkomprimierungsverhältnisses zu komprimieren; und
eine Sendeeinheit (403), die dazu konfiguriert ist, das komprimierte Virtual-Reality-Bild an das Virtual-Reality-Gerät zu senden;
wobei die Verarbeitungseinheit ferner zu Folgendem konfiguriert ist:
Erfassen der aktuellen Kanalqualität eines Funkkanals, wobei der Funkkanal ein Kommunikationskanal zwischen dem Virtual-Reality-Gerät und der Vorrichtung zum Senden eines Virtual-Reality-Bildes ist; und
Bestimmen eines Bildkomprimierungsverhältnisses, das der erfassten Kanalqualität entspricht, auf Grundlage einer Abbildungsbeziehung zwischen der Kanalqualität eines Funkkanals und einem Bildkomprimierungsverhältnis; und
wobei die Verarbeitungseinheit speziell zu Folgendem konfiguriert ist:
Bestimmen des Bildkomprimierungsverhältnisses, das der erfassten Kanalqualität entspricht, als das erste Bildkomprimierungsverhältnis auf Grundlage der ersten Bewegungsinformationen; oder Einstellen des Bildkomprimierungsverhältnisses, das der erfassten Kanalqualität entspricht, auf Grundlage der ersten Bewegungsinformationen und Verwenden eines eingestellten Bildkomprimierungsverhältnisses als das erste Bildkomprimierungsverhältnis;
**gekennzeichnet durch**: wobei die Verarbeitungseinheit ferner zu Folgendem konfiguriert ist:
Bestimmen eines Modulations- und Codierungsschemas, das der erfassten Kanalqualität entspricht, auf Grundlage einer Abbildungsbeziehung zwischen der Kanalqualität eines Funkkanals und einem Modulations- und Codierungsschema;
Bestimmen des Modulations- und Codierungsschemas, das der erfassten Kanalqualität entspricht, als ein erstes Modulations- und Codierungsschema auf Grundlage der ersten Bewegungsinformationen; oder Einstellen des Modulations- und Codierungsschemas, das der erfassten Kanalqualität entspricht, durch den Virtual-Reality-Host auf Grundlage der ersten Bewegungsinformationen, und Verwenden eines eingestellten Modulations- und Codierungsschemas als ein erstes Modulations- und Codierungsschema; und
Durchführen einer Modulation und Codierung an dem komprimierten Virtual-Reality-Bild gemäß dem ersten Modulations- und Codierungsschema; und
wobei die Sendeeinheit speziell zu Folgendem konfiguriert ist: Senden des komprimierten Virtual-Reality-Bildes, an dem die Modulation und Codierung durchgeführt wurden, an das Virtual-Reality-Gerät;
wobei die Verarbeitungseinheit speziell zu Folgendem konfiguriert ist:
Bestimmen des Modulations- und Codierungsschemas, das der erfassten Kanalqualität entspricht, als das erste Modulations- und Codierungsschema, wenn auf Grundlage der ersten Bewegungsinformationen und der historischen Bewegungsinformationen des Virtual-Reality-Geräts bestimmt wird, dass sich das Virtual-Reality-Gerät in der zukünftigen ersten Zeitdauer in einem stationären Zustand befindet; und
wobei die Verarbeitungseinheit speziell zu Folgendem konfiguriert ist:
Einstellen des Modulations- und Codierungsschemas, das der erfassten Kanalqualität entspricht, wenn auf Grundlage der ersten Bewegungsinformationen und der historischen Bewegungsinformationen des Virtual-Reality-Geräts bestimmt wird, dass sich das Virtual-Reality-Gerät in der zukünftigen ersten Zeitdauer in einem sich bewegenden Zustand befindet;
wobei die Verarbeitungseinheit speziell zu Folgendem konfiguriert ist:
Einstellen des Modulations- und Codierungsschemas, das der erfassten Kanalqualität entspricht, auf ein zweites Modulations- und Codierungsschema, wenn die ersten Bewegungsinformationen verwendet werden, um anzuzeigen, dass die Bewegungsrate des Virtual-Reality-Geräts geringer als oder gleich einer ersten Rate ist, wobei eine Modulations- und Codierungsrate des zweiten Modulations- und Codierungsschemas größer als eine Modulations- und Codierungsrate des Modulations- und Codierungsschemas ist, das der erfassten Kanalqualität entspricht; oder
Einstellen des Modulations- und Codierungsschemas, das der erfassten Kanalqualität entspricht, auf ein drittes Modulations- und Codierungsschema, wenn die ersten Bewegungsinformationen verwendet werden, um anzuzeigen, dass die Bewegungsrate des Virtual-Reality-Geräts größer als eine zweite Rate ist, wobei eine Modulations- und Codierungsrate des dritten Modulations- und Codierungsschemas geringer als die Modulations- und Codierungsrate des Modulations- und Codierungsschemas ist, das der erfassten Kanalqualität entspricht; wobei
die erste Rate geringer als die zweite Rate ist.

6. Vorrichtung nach Anspruch 5, wobei die Verarbeitungseinheit speziell zu Folgendem konfiguriert ist:
Bestimmen des Bildkomprimierungsverhältnisses, das der erfassten Kanalqualität entspricht, als das erste Bildkomprimierungsverhältnis, wenn auf Grundlage der ersten Bewegungsinformationen und historischer Bewegungsinformationen des Virtual-Reality-Geräts bestimmt wird, dass sich das Virtual-Reality-Gerät in einer zukünftigen ersten Zeitdauer in einem stationären Zustand befindet.

7. Vorrichtung nach Anspruch 5, wobei die Verarbeitungseinheit speziell zu Folgendem konfiguriert ist:
Einstellen des Bildkomprimierungsverhältnisses, das der erfassten Kanalqualität entspricht, auf Grundlage der ersten Bewegungsinformationen, wenn auf Grundlage der ersten Bewegungsinformationen und historischer Bewegungsinformationen des Virtual-Reality-Geräts bestimmt wird, dass sich das Virtual-Reality-Gerät in einer zukünftigen ersten Zeitdauer in einem sich bewegenden Zustand befindet.

8. Vorrichtung nach Anspruch 5 oder 7, wobei die Verarbeitungseinheit speziell zu Folgendem konfiguriert ist:
Reduzieren des Bildkomprimierungsverhältnisses, das der erfassten Kanalqualität entspricht, wenn die ersten Bewegungsinformationen dazu verwendet werden, anzugeben, dass eine Bewegungsrate des Virtual-Reality-Geräts geringer oder gleich einer ersten Rate ist; oder
Erhöhen des Bildkomprimierungsverhältnisses, das der erfassten Kanalqualität entspricht, wenn die ersten Bewegungsinformationen dazu verwendet werden, anzugeben, dass eine Bewegungsrate des Virtual-Reality-Geräts größer als eine zweite Rate ist; wobei
die erste Rate geringer als oder gleich der zweiten Rate ist.

9. Computerprogrammprodukt, das einen Satz von Anweisungen umfasst, der bei Ausführung auf einem Computer den Computer dazu veranlasst, das Verfahren nach einem der Ansprüche 1 bis 4 durchzuführen.

## Revendications

1. Procédé d'envoi d'une image de réalité virtuelle, comprenant :
la réception (S202), par un hôte de réalité virtuelle, de premières informations de mouvement envoyées par un dispositif de réalité virtuelle, dans lequel les premières informations de mouvement sont utilisées pour indiquer un état de mouvement actuel du dispositif de réalité virtuelle ;
la détermination (S203), par l'hôte de réalité virtuelle, d'un premier taux de compression d'image sur la base des premières informations de mouvement ;
la compression (S204), par l'hôte de réalité virtuelle, d'une image de réalité virtuelle à envoyer sur la base du premier taux de compression d'image ; et
l'envoi (S207), par l'hôte de réalité virtuelle, de l'image de réalité virtuelle compressée au dispositif de réalité virtuelle ;
dans lequel avant la détermination, par l'hôte de réalité virtuelle, d'un premier taux de compression d'image sur la base des premières informations de mouvement, le procédé comprend en outre :
la détection, par l'hôte de réalité virtuelle, de la qualité de canal actuelle d'un canal radio, dans lequel le canal radio est un canal de communication entre le dispositif de réalité virtuelle et l'hôte de réalité virtuelle ; et
la détermination, par l'hôte de réalité virtuelle sur la base d'une relation de mise en correspondance entre la qualité de canal d'un canal radio et un taux de compression d'image, d'un taux de compression d'image correspondant à la qualité de canal détectée ; et
la détermination, par l'hôte de réalité virtuelle, d'un premier taux de compression d'image sur la base des premières informations de mouvement comprend :
la détermination, par l'hôte de réalité virtuelle sur la base des premières informations de mouvement, du taux de compression d'image correspondant à la qualité de canal détectée comme étant le premier taux de compression d'image ; ou l'ajustement, par l'hôte de réalité virtuelle sur la base des premières informations de mouvement, du taux de compression d'image correspondant à la qualité de canal détectée, et l'utilisation d'un taux de compression d'image ajusté comme étant le premier taux de compression d'image ;
**caractérisé par** :
dans lequel après la détection, par l'hôte de réalité virtuelle, de la qualité de canal actuelle d'un canal radio, le procédé comprend en outre :
la détermination, par l'hôte de réalité virtuelle sur la base d'une relation de mise en correspondance entre la qualité de canal d'un canal radio et un schéma de modulation et de codage, d'un schéma de modulation et de codage correspondant à la qualité de canal détectée ; et
la détermination (S205), par l'hôte de réalité virtuelle sur la base des premières informations de mouvement, du schéma de modulation et de codage correspondant à la qualité de canal détectée en tant que premier schéma de modulation et de codage ; ou l'ajustement, par l'hôte de réalité virtuelle sur la base des premières informations de mouvement, du schéma de modulation et de codage correspondant à la qualité de canal détectée, et l'utilisation d'un schéma de modulation et de codage ajusté en tant que premier schéma de modulation et de codage ;
avant l'envoi, par l'hôte de réalité virtuelle, de l'image de réalité virtuelle compressée au dispositif de réalité virtuelle, le procédé comprend en outre :
la réalisation (S206), par l'hôte de réalité virtuelle, d'une modulation et d'un codage sur l'image de réalité virtuelle compressée selon le premier schéma de modulation et de codage ; et
l'envoi, par l'hôte de réalité virtuelle, de l'image de réalité virtuelle compressée au dispositif de réalité virtuelle comprend :
l'envoi, par l'hôte de réalité virtuelle, de l'image de réalité virtuelle compressée sur laquelle une modulation et un codage ont été réalisés au dispositif de réalité virtuelle ;
dans lequel la détermination, par l'hôte de réalité virtuelle sur la base des premières informations de mouvement, du schéma de modulation et de codage correspondant à la qualité de canal détectée en tant que premier schéma de modulation et de codage comprend :
la détermination, par l'hôte de réalité virtuelle, du schéma de modulation et de codage correspondant à la qualité de canal détectée comme étant le premier schéma de modulation et de codage s'il est déterminé, sur la base des premières informations de mouvement et des informations de mouvement historiques du dispositif de réalité virtuelle, que le dispositif de réalité virtuelle est dans un état stationnaire dans la première durée future ; et
dans lequel l'ajustement, par l'hôte de réalité virtuelle sur la base des premières informations de mouvement, du schéma de modulation et de codage correspondant à la qualité de canal détectée comprend :
l'ajustement, par l'hôte de réalité virtuelle sur la base des premières informations de mouvement, du schéma de modulation et de codage correspondant à la qualité de canal détectée s'il est déterminé, sur la base des premières informations de mouvement et des informations de mouvement historiques du dispositif de réalité virtuelle, que le dispositif de réalité virtuelle est dans un état mobile dans la première durée future ;
dans lequel l'ajustement, par l'hôte de réalité virtuelle sur la base des premières informations de mouvement, du schéma de modulation et de codage correspondant à la qualité de canal détectée comprend :
l'ajustement, par l'hôte de réalité virtuelle, du schéma de modulation et de codage correspondant à la qualité de canal détectée à un deuxième schéma de modulation et de codage si les premières informations de mouvement sont utilisées pour indiquer que la vitesse de déplacement du dispositif de réalité virtuelle est inférieure ou égale à une première vitesse, dans lequel un taux de modulation et de codage du deuxième schéma de modulation et de codage est supérieur à un taux de modulation et de codage du schéma de modulation et de codage correspondant à la qualité de canal détectée ; ou
l'ajustement, par l'hôte de réalité virtuelle, du schéma de modulation et de codage correspondant à la qualité de canal détectée à un troisième schéma de modulation et de codage si les premières informations de mouvement sont utilisées pour indiquer que la vitesse de déplacement du dispositif de réalité virtuelle est supérieure à une seconde vitesse, dans lequel un taux de modulation et de codage du troisième schéma de modulation et de codage est inférieur à un taux de modulation et de codage du schéma de modulation et de codage correspondant à la qualité de canal détectée ; dans lequel
la première vitesse est inférieure à la seconde vitesse.

2. Procédé selon la revendication 1, dans lequel la détermination, par l'hôte de réalité virtuelle sur la base des premières informations de mouvement, du taux de compression d'image correspondant à la qualité de canal détectée comme étant le premier taux de compression d'image comprend :
la détermination, par l'hôte de réalité virtuelle, du taux de compression d'image correspondant à la qualité de canal détectée comme étant le premier taux de compression d'image s'il est déterminé, sur la base des premières informations de mouvement et des informations de mouvement historiques du dispositif de réalité virtuelle, que le dispositif de réalité virtuelle est dans un état stationnaire dans une première durée future.

3. Procédé selon la revendication 1, dans lequel l'ajustement, par l'hôte de réalité virtuelle sur la base des premières informations de mouvement, du taux de compression d'image correspondant à la qualité de canal détectée comprend :
l'ajustement, par l'hôte de réalité virtuelle sur la base des premières informations de mouvement, du taux de compression d'image correspondant à la qualité de canal détectée s'il est déterminé, sur la base des premières informations de mouvement et des informations de mouvement historiques du dispositif de réalité virtuelle, que le dispositif de réalité virtuelle est dans un état mobile dans une première durée future.

4. Procédé selon la revendication 1 ou 3, dans lequel l'ajustement, par l'hôte de réalité virtuelle sur la base des premières informations de mouvement, du taux de compression d'image correspondant à la qualité de canal détectée comprend :
la réduction, par l'hôte de réalité virtuelle, du taux de compression d'image correspondant à la qualité de canal détectée si les premières informations de mouvement sont utilisées pour indiquer qu'une vitesse de déplacement du dispositif de réalité virtuelle est inférieure ou égale à une première vitesse ; ou
l'augmentation, par l'hôte de réalité virtuelle, du taux de compression d'image correspondant à la qualité de canal détectée si les premières informations de mouvement sont utilisées pour indiquer qu'une vitesse de déplacement du dispositif de réalité virtuelle est supérieure à une seconde vitesse ; dans lequel la première vitesse est inférieure ou égale à la seconde vitesse.

5. Appareil d'envoi d'une image de réalité virtuelle, comprenant :
une unité de réception (401), configurée pour recevoir des premières informations de mouvement envoyées par un dispositif de réalité virtuelle, dans lequel les premières informations de mouvement sont utilisées pour indiquer un état de mouvement actuel du dispositif de réalité virtuelle ;
une unité de traitement (402), configurée pour déterminer un premier taux de compression d'image sur la base des premières informations de mouvement, et compresser une image de réalité virtuelle à envoyer sur la base du premier taux de compression d'image ; et
une unité d'envoi (403), configurée pour envoyer l'image de réalité virtuelle compressée au dispositif de réalité virtuelle ;
dans lequel l'unité de traitement est en outre conçue pour :
détecter la qualité de canal actuelle d'un canal radio, dans lequel le canal radio est un canal de communication entre le dispositif de réalité virtuelle et l'appareil d'envoi d'une image de réalité virtuelle ; et
déterminer, sur la base d'une relation de mise en correspondance entre la qualité de canal d'un canal radio et un taux de compression d'image, un taux de compression d'image correspondant à la qualité de canal détectée ; et
l'unité de traitement est spécifiquement configurée pour :
déterminer, sur la base des premières informations de mouvement, le taux de compression d'image correspondant à la qualité de canal détectée comme étant le premier taux de compression d'image ; ou ajuster, sur la base des premières informations de mouvement, le taux de compression d'image correspondant à la qualité de canal détectée, et utiliser un taux de compression d'image ajusté comme étant le premier taux de compression d'image ;
**caractérisé par** :
dans lequel l'unité de traitement est en outre configurée pour : déterminer, sur la base d'une relation de mise en correspondance entre la qualité de canal d'un canal radio et un schéma de modulation et de codage, un schéma de modulation et de codage correspondant à la qualité de canal détectée ; et
déterminer, sur la base des premières informations de mouvement, le schéma de modulation et de codage correspondant à la qualité de canal détectée en tant que premier schéma de modulation et de codage ; ou ajuster, sur la base des premières informations de mouvement, le schéma de modulation et de codage correspondant à la qualité de canal détectée, et utiliser un schéma de modulation et de codage ajusté en tant que premier schéma de modulation et de codage ; et
réaliser une modulation et un codage sur l'image de réalité virtuelle compressée selon le premier schéma de modulation et de codage ; et
l'unité d'envoi est spécifiquement configurée pour : envoyer l'image de réalité virtuelle compressée sur laquelle une modulation et un codage ont été réalisés au dispositif de réalité virtuelle ;
dans lequel l'unité de traitement est spécifiquement configurée pour :
déterminer le schéma de modulation et de codage correspondant à la qualité de canal détectée comme étant le premier schéma de modulation et de codage s'il est déterminé, sur la base des premières informations de mouvement et des informations de mouvement historiques du dispositif de réalité virtuelle, que le dispositif de réalité virtuelle est dans un état stationnaire dans la première durée future ; et
dans lequel l'unité de traitement est spécifiquement configurée pour :
ajuster, sur la base des premières informations de mouvement, le schéma de modulation et de codage correspondant à la qualité de canal détectée s'il est déterminé, sur la base des premières informations de mouvement et des informations de mouvement historiques du dispositif de réalité virtuelle, que le dispositif de réalité virtuelle est dans un état mobile dans la première durée future ;
dans lequel l'unité de traitement est spécifiquement configurée pour :
ajuster le schéma de modulation et de codage correspondant à la qualité de canal détectée à un deuxième schéma de modulation et de codage si les premières informations de mouvement sont utilisées pour indiquer que la vitesse de déplacement du dispositif de réalité virtuelle est inférieure ou égale à une première vitesse, dans lequel un taux de modulation et de codage du deuxième schéma de modulation et de codage est supérieur à un taux de modulation et de codage du schéma de modulation et de codage correspondant à la qualité de canal détectée ; ou
ajuster le schéma de modulation et de codage correspondant à la qualité de canal détectée à un troisième schéma de modulation et de codage si les premières informations de mouvement sont utilisées pour indiquer que la vitesse de déplacement du dispositif de réalité virtuelle est supérieure à une seconde vitesse, dans lequel un taux de modulation et de codage du troisième schéma de modulation et de codage est inférieur à un taux de modulation et de codage du schéma de modulation et de codage correspondant à la qualité de canal détectée ; dans lequel
la première vitesse est inférieure à la seconde vitesse.

6. Appareil selon la revendication 5, dans lequel l'unité de traitement est spécifiquement configurée pour :
déterminer le taux de compression d'image correspondant à la qualité de canal détectée comme étant le premier taux de compression d'image s'il est déterminé, sur la base des premières informations de mouvement et des informations de mouvement historiques du dispositif de réalité virtuelle, que le dispositif de réalité virtuelle est dans un état stationnaire dans une première durée future.

7. Appareil selon la revendication 5, dans lequel l'unité de traitement est spécifiquement configurée pour :
ajuster, sur la base des premières informations de mouvement, le taux de compression d'image correspondant à la qualité de canal détectée s'il est déterminé, sur la base des premières informations de mouvement et des informations de mouvement historiques du dispositif de réalité virtuelle, que le dispositif de réalité virtuelle est dans un état mobile dans une première durée future.

8. Appareil selon la revendication 5 ou 7, dans lequel l'unité de traitement est spécifiquement configurée pour :
réduire le taux de compression d'image correspondant à la qualité de canal détectée si les premières informations de mouvement sont utilisées pour indiquer qu'une vitesse de déplacement du dispositif de réalité virtuelle est inférieure ou égale à une première vitesse ; ou
augmenter le taux de compression d'image correspondant à la qualité de canal détectée si les premières informations de mouvement sont utilisées pour indiquer qu'une vitesse de déplacement du dispositif de réalité virtuelle est supérieure à une seconde vitesse ; dans lequel
la première vitesse est inférieure ou égale à la seconde vitesse.

9. Produit de programme informatique comprenant un jeu d'instructions qui, lorsqu'il est exécuté sur un ordinateur, amène l'ordinateur à mettre en œuvre le procédé selon l'une quelconque des revendications 1 à 4.
